# EUROPÄISCHE PATENTSCHRIFT

(11) **EP 3 480 095 B1**
(45) Veröffentlichungstag und Bekanntmachung des Hinweises auf die Patenterteilung: **21.04.2021**
(21) Anmeldenummer: 18202233.5
(22) Anmeldetag: 24.10.2018
(51) Int. Cl.: B62K 19/40

(54) **FAHRRADRAHMENELEMENT**
BICYCLE FRAME ELEMENT
ÉLEMENT DE CADRE DE VÉLO

(30) Priorität: 03.11.2017 DE 202017005685 U
(43) Veröffentlichungstag der Anmeldung: 08.05.2019
(73) Patentinhaber: Canyon Bicycles GmbH, 56073 Koblenz (DE)
(72) Erfinder: Thoma, Vincenz, 56068 Koblenz (DE)
(74) Vertreter: dompatent von Kreisler Selting Werner - Partnerschaft von Patent- und Rechtsanwälten mbB

(56) Entgegenhaltungen:
- CN-U- 204 489 069
- CN-U- 204 895 726
- CN-Y- 2 705 380
- DE-A1-102015 010 817
- US-A1- 2015 274 233

## Beschreibung

Die Erfindung betrifft ein Fahrradrahmenelement, das ein Rahmenrohr, wie bspw. ein Oberrohr, ein Unterrohr oder ein Sattelrohr umfasst.

Zur Mitnahme von Zubehör, wie Werkzeug, Ersatzteile, Regenjacken etc. beim Fahrradfahren, sind unterschiedliche Aufnahmebehälter und der gleichen bekannt. Bei Fahrrädern wie Mountainbikes, Rennrädern und dergleichen, die üblicherweise keinen Gepäckträger aufweisen, sind bspw. an der Unterseite des Sattels befestigbare Taschen bekannt. Diese weisen jedoch nur ein begrenztes Volumen auf. Es ist zusätzlich bekannt ähnliche Taschen mit bspw. Klettbändern oder dergleichen am Oberrohr zu befestigen. Derartige Taschen sind jedoch häufig störend, da in diesem Bereich häufig Flaschenhalter vorgesehen werden. Desweiteren ist es bekannt in Rahmenrohren Öffnungen vorzusehen, sodass der Hohlraum eines Rahmenrohrs als Aufbewahrungsfach genutzt werden kann. Dies weist jedoch den wesentlichen Nachteil auf, dass hierdurch die Stabilität des Rahmenrohrs geschwächt wird. Es ist daher erforderlich, das Rahmenrohr im Bereich der Öffnung entsprechend zu verstärken um eine ausreichende Stabilität zu gewährleisten. Desweiteren ist das Aufbewahren bspw. von Werkzeug in derartigen Öffnungen bzw. Ausnehmungen von Rahmenrohren insofern nachteilig da das Werkzeug und anderes Zubehör beim Fahren klappern kann, da das Zubehör in derartigen Ausnehmungen nicht fixiert ist.

Aus DE 10 2015 010 817 A1 ist ein gattungsgemäßer Fahrradrahmen bekannt, an dessen Unterrohr eine Batterie befestigt ist. Zur teilweisen Aufnahme der Batterie weist das Unterrohr eine Einbuchtung auf.

Aufgabe der Erfindung ist es ein Fahrradrahmenelement zu schaffen, das insbesondere auf einfache Weise zur Aufnahme von Zubehör geeignet ist.

Die Lösung der Aufgabe erfolgt erfindungsgemäß durch die Merkmale des Anspruchs 1.

Das erfindungsgemäße Fahrradrahmenelement weist ein Rahmenrohr, wie insbesondere ein Oberrohr, ein Unterrohr oder ein Sattelrohr eines Fahrradrahmens auf. Das Fahrradrahmenelement ist somit in bevorzugter Ausführungsform Bestandteil eines Fahrradrahmens. Erfindungsgemäß weist das Rahmenrohr eine Einbuchtung auf. Die Einbuchtung dient zur Aufnahme von Fahrradzubehör, wie Fahrradwerkzeug, eine Fahrradpumpe, eine Regenjacke, Bekleidungsstücke oder dergleichen. Das Rahmenrohr ist vorzugsweise aus einem Kunststoffmaterial, insbesondere faserverstärktem Kunststoff, wie Carbon hergestellt. Das Rahmenrohr ist im Bereich der Einbuchtung als in Umfangsrichtung geschlossenes Profil ausgebildet. Insbesondere ist das Rahmenrohr somit nicht nur im Bereich in dem keine Einbuchtung vorgesehen ist, sondern auch in dem Bereich der Einbuchtung als geschlossenes Profil ausgebildet. Durch eine derartige Ausgestaltung des Rahmenrohrs kann einerseits eine Einbuchtung ausgebildet werden, in der Fahrradzubehör aufgenommen werden kann, andererseits ist es nicht erforderlich das Rahmenrohr in diesem Bereich besonders zu versteifen, da das Rahmenrohr keine, die Stabilität schwächende Öffnung aufweist. Aufgrund der Einbuchtung, in dem in Umfangsrichtung geschlossenen Profil des Rahmenrohrs, ist nur eine geringe Änderung der Stabilität des Rahmenrohrs in diesem Bereich durch die Einbuchtung hervorgerufen. Diese Änderung der Stabilität liegt ggf. in der Änderung des Profils begründet. Da es sich hierbei jedoch nur um eine geringe Stabilitätsänderung handelt, kann diese entweder vernachlässigt werden oder durch geringfügige Versteifungsmaßnahmen, wie durch die Versteifungsrippen, Materialverdickungen und dergleichen kompensiert werden.

In besonders bevorzugter Ausführungsform weist das Rahmenrohr des erfindungsgemäßen Fahrradrahmenelements auch im Bereich der Einbuchtung keine Öffnung auf. Desweiteren ist mindestens ein, die Einbuchtung überspannendes Halteelement vorgesehen. Bei dem Halteelement kann es sich beispielsweise um ein oder mehrere Halteriemen, eine Membran, ein Netz oder dergleichen handeln. Durch das Halteelement erfolgt insbesondere ein Fixieren, bzw. Halten des in der Einbuchtung angeordneten Fahrradzubehörs.

Die Einbuchtung ist vorzugsweise konkav ausgebildet. Desweiteren ist es bevorzugt, dass sich die Einbuchtung in Längsrichtung des Rahmenrohrs erstreckt. Die Einbuchtung weist hierbei vorzugsweise eine Länge von mindestens 10 cm, insbesondere mindestens 15 cm und besonders bevorzugt mindestens 20 cm auf. Aufgrund der Länge ist es somit möglich auch eine Fahrradpumpe in der Einbuchtung anzuordnen, bzw. aufzubewahren. Gegenüber der herkömmlichen Oberfläche des Rahmenrohrs, d.h. der Oberflächenbereiche in denen keine Einbuchtung vorgesehen ist, weist die Einbuchtung eine Tiefe von vorzugsweise 1-3 cm auf.

Desweiteren ist es bevorzugt, dass das Halteelement zumindest teilweise elastisch ausgebildet ist. Hierdurch ist es auf einfache Weise möglich in der Einbuchtung auch Fahrradzubehör anzuordnen, was ein größeres Volumen als die Einbuchtung selbst aufweist.

In einer bevorzugten Weiterbildung der Erfindung weist das Halteelement mindestens eine Aufnahmetasche auf. Diese ist insbesondere für Kleinteile geeignet. Hierdurch ist insbesondere sichergestellt, dass derartige Kleinteile in der Einbuchtung nicht verrutschen oder klappern. Auch kann bei einem entsprechenden Material eines Halteelements eine wasserdichte Aufnahmetasche ausgebildet sein. Diese ist beispielsweise zur Aufbewahrung von Nahrungsmitteln oder dergleichen geeignet.

Desweiteren ist es bevorzugt, dass das Halteelement lösbar mit dem Rahmenrohr verbunden ist. Dies ist beispielsweise bei der Reinigung des Fahrrads vorteilhaft, weil somit auf einfache Weise die Einbuchtung mit gereinigt werden kann. Die Verbindung zwischen dem mindestens einen Halteelement und dem Rahmenrohr kann hierbei über Druckknöpfe, Ösen, Verschraubungen oder dergleichen erfolgen. Auch ist eine Verbindung über eine Art Reisverschluss oder eine im Rahmen vorgesehene Längsnut, in die eine Verdickung des Halteelements eingeschoben wird, möglich. Auch Rastverbindungen oder dergleichen sind als lösbare Verbindungen geeignet.

Desweiteren ist es für eine möglichst einfache Zugänglichkeit auch während der Fahrt vorteilhaft, wenn die Einbuchtung nach oben offen ist. Bei einer bspw. im Oberrohr vorgesehenen Einbuchtung weist diese nach oben und ist somit sehr einfach zugänglich. Dies ist entsprechend auch bei einer Einbuchtung im Unterrohr gegeben, wobei eine Einbuchtung des Unterrohrs insofern bevorzugt ist, da das Unterrohr üblicherweise ein größeres Volumen aufweist, sodass eine größere Einbuchtung vorgesehen werden kann. Bei Vorsehen einer Einbuchtung im Sattelrohr, ist diese vorzugsweise nach vorne, bzw. in Fahrrichtung offen.

Eine Oberfläche der Einbuchtung ist erfindungsgemäß beschichtet. Hierbei handelt es sich um eine Gummierung oder dergleichen um einen zuverlässigen Halt des Zubehörs in der Einbuchtung zu gewährleisten und das Risiko des Verrutschens oder Herausfallens zu verringern.

Desweiteren ist es möglich an der Oberfläche der Einbuchtung Fixierelemente oder Anlageelemente vorzusehen, so dass bspw. eine Unterteilung des durch die Einbuchtung ausgebildeten Fachs erfolgt. Auch können zusätzliche Halteelemente, wie Riemen, Taschen oder dergleichen angeordnet sein um Kleinteile aufzunehmen.

Nachfolgend wird die Erfindung anhand einer bevorzugten Ausführungsform unter Bezugnahme auf die anliegenden Zeichnungen näher erläutert.

Es zeigen:
Fig. 1: einen schematischen Querschnitt eines Fahrradrahmenelements,
Fig. 2: eine schematische Draufsicht eines erfindungsgemäßen Fahrradrahmenelements und
Fig. 3: eine vergrößerte Darstellung des Bereichs III in Figur 1.

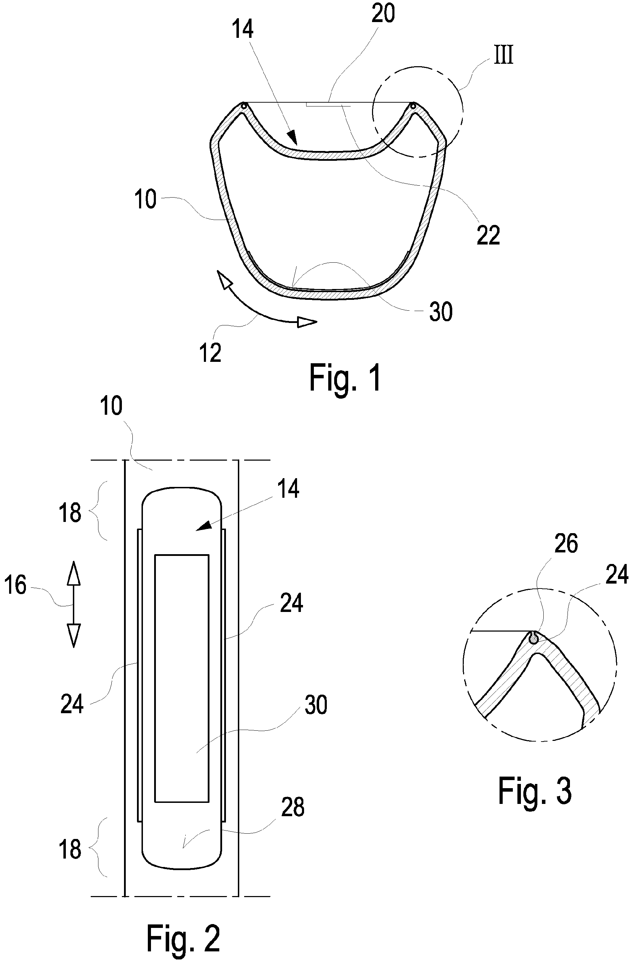

Das erfindungsgemäße Fahrradrahmenelement weist ein Rahmenrohr 10 auf, bei dem es sich beispielsweise um ein Oberrohr, ein Unterrohr oder ein Sattelrohr eines Fahrradrahmens handelt. Im Querschnitt (Fig. 1) ist das Rahmenrohr 10 in Umfangsrichtung 12 geschlossen. Dieses in Umfangsrichtung 12 geschlossene Profil des Rahmenrohrs weist eine nach innen eingewölbte, insbesondere konkav ausgebildete Einbuchtung 14 auf. Die Einbuchtung 14 dient insbesondere zur Aufbewahrung von Fahrradzubehör wie Werkzeug, eine Fahrradpumpe, eine Regenjacke oder dergleichen. Die Einbuchtung 14 erstreckt sich in Längsrichtung 16 des Rahmenrohrs 10. Auch in den Übergangsbereichen 18 in Längsrichtung 16, in denen der Übergang zwischen der Einbuchtung 14 und dem herkömmlich ausgebildeten Rahmenrohr 10 erfolgt, ist derart ausgebildet, dass keine Öffnungen im Rahmenrohr 10 vorgesehen sind. Ferner sind sämtliche Übergänge zwischen der Einbuchtung 14 und dem Rahmenrohr 10 möglichst stufenfrei und vorzugsweise mit entsprechend großen Radien ausgebildet. Dies ist insbesondere bei der Verwendung von faserverstärktem Kunststoffmaterial wie Carbon zur Ausgestaltung des Rahmenrohrs vorteilhaft.

Die Einbuchtung 14 ist von mindestens einem Halteelement 20 überspannt. Hierbei können beispielsweise mehrere riemenförmig ausgebildete Halteelemente vorgesehen sein, die sich in Figur 2 von links nach rechts erstrecken würden, wobei in Figur 2 aus Gründen der Übersichtlichkeit keine Halteelemente dargestellt sind. Auch kann ein Halteelement 20 vorgesehen sein, das die gesamte Ausbuchtung 14 überdeckt und somit verschließt. Das Halteelement ist vorzugsweise aus zumindest teilweise elastischem Material hergestellt und insbesondere als Membran oder Netz ausgebildet. Insbesondere an eine Innenseite eines Halteelements 20 können eine oder mehrere Taschen 22 zur Aufnahme von Kleinteilen oder dergleichen vorgesehen sein.

Das mindestens eine Aufnahmeelement ist vorzugsweise lösbar mit dem Rahmenrohr 10 verbunden. Im dargestellten Ausführungsbeispiel weist das Rahmenrohr 10 zwei sich in Längsrichtung 16 erstreckende Nuten 24 auf. In die beiden einander gegenüberliegende, zueinander parallelen Nuten 24 können im Randbereich des Halteelements 20 vorgesehene Verdickungen 26 eingeschoben werden.

An einer Oberfläche 28 der Einbuchtung 14 ist eine Beschichtung 30 vorgesehen. Diese kann sich über die gesamte Oberseite 28 oder einem Teil der Oberseite 28 erstrecke und dient insbesondere dazu ein Rutschen oder Verschieben von in der Einbuchtung angeordnetem Fahrradzubehör zu vermeiden.

## Patentansprüche

1. Fahrradrahmenelement mit
einem eine Einbuchtung (14) zur Aufnahme von Fahrradzubehör aufweisenden Rahmenrohr (10) und
mindestens einem die Einbuchtung (14) überspannenden Halteelement (20),
wobei das Rahmenrohr (10) im Bereich der Einbuchtung (14) als in Umfangsrichtung (12) geschlossenes Profil ausgebildet ist,
**dadurch gekennzeichnet, dass**
das Rahmenrohr (10) an einer Oberfläche (28) der Einbuchtung (14) zumindest teilweise beschichtet ist, um ein Rutschen oder Verschieben von in der Einbuchtung angeordnetem Fahrradzubehör zu vermeiden.

2. Fahrradrahmenelement nach Anspruch 1, **dadurch gekennzeichnet, dass** die Einbuchtung (14) konkav ausgebildet ist.

3. Fahrradrahmenelement nach Anspruch 1 oder 2, **dadurch gekennzeichnet, dass** die Einbuchtung (14) in Längsrichtung (16) des Rahmenrohrs (10) verläuft.

4. Fahrradrahmenelement nach Anspruch 3, **dadurch gekennzeichnet, dass** die Einbuchtung (14) eine Länge von mindestens 10 cm, vorzugsweise mindestens 15 cm und besonders bevorzugt mindestens 20 cm aufweist.

5. Fahrradrahmenelement nach einem der Ansprüche 1 bis 4, dadurch gekennzeichet, dass das Halteelement (20) zumindest teilweise elastisch ausgebildet ist.

6. Fahrradrahmenelement nach einem der Ansprüche 1 bis 5, **dadurch gekennzeichnet, dass** das Halteelement (20) als Halteriemen ausgebildet ist, wobei vorzugsweise mindestens zwei Halteriemen vorgesehen sind.

7. Fahrradrahmenelement nach einem der Ansprüche 1 bis 6, **dadurch gekennzeichnet, dass** das Halteelement (20) zumindest teilweise als Membran und/oder Netz ausgebildet ist.

8. Fahrradrahmenelement nach einem der Ansprüche 1 bis 7, **dadurch gekennzeichnet, dass** das Halteelement (20) mindestens eine Aufnahmetasche (22) insbesondere zur Aufnahme von Kleinteilen aufweist.

9. Fahrradrahmenelement nach einem der Ansprüche 1 bis 8, **dadurch gekennzeichnet, dass** das Halteelement (20) lösbar mit dem Rahmenrohr (10) verbunden ist.

10. Fahrradrahmenelement nach einem der Ansprüche 1 bis 9, **dadurch gekennzeichnet, dass** die Einbuchtung (14) nach oben offen ist.

11. Fahrradrahmenelement nach einem der Ansprüche 1 bis 10, **dadurch gekennzeichnet, dass** das Rahmenrohr (10) an einer Oberfläche (28) der Einbuchtung (14) Fixierelemente aufweist.

## Claims

1. A bicycle frame element comprising
a frame tube (10) comprising a recess (14) for storage of bicycle accessories, and
at least one holding element (20) extending across the recess (14), wherein, in the area of the recess (14), the frame tube (10) is formed as a profile closed in the circumferential direction (12),
**characterized in that**
on a surface (28) of the recess (14), the frame tube (10) is at least partially coated to prevent a sliding or shifting of bicycle accessories arranged in the recess.

2. The bicycle frame element according to claim 1, **characterized in that** the recess (14) has a concave shape.

3. The bicycle frame element according to claim 1 or 2, **characterized in that** the recess (14) extends in the longitudinal direction (16) of the frame tube (10).

4. The bicycle frame element according to claim 3, **characterized in that** the recess (14) has a length of at least 10 cm, preferably at least 15 cm and with particular preference at least 20 cm.

5. The bicycle frame element according to any one of claims 1 to 4, **characterized in that** the holding element (20) is least partially elastic.

6. The bicycle frame element according to any one of claims 1 to 5, **characterized in that** the holding element (20) is formed as a holding belt, wherein preferably at least two holding belts are provided.

7. The bicycle frame element according to any one of claims 1 to 6, **characterized in that** the holding element (20) is at least partially formed as a membrane and/or a net.

8. The bicycle frame element according to any one of claims 1 to 7, **characterized in that** the holding element (20) comprises at least one storage pocket (22) provided particularly for storage of small parts.

9. The bicycle frame element according to any one of claims 1 to 8, **characterized in that** the holding element (20) is connected to the frame tube (10) in a releasable manner.

10. The bicycle frame element according to any one of claims 1 to 9, **characterized in that** the recess (14) is open in upward direction.

11. The bicycle frame element according to any one of claims 1 to 10, **characterized in that**, on a surface (28) of the recess (14), the frame tube (10) is provided with fixing elements.

## Revendications

1. Élément de cadre de bicyclette doté d'un tube de cadre (10) comportant une échancrure (14) pour accueillir des accessoires de bicyclette et
d'au moins un élément de maintien (20) enjambant l'échancrure (14),
dans lequel le tube de cadre (10) est réalisé dans la zone de l'échancrure (14) comme un profil fermé dans la direction circonférentielle (12),
**caractérisé en ce que**
le tube de cadre (10) est au moins partiellement revêtu sur une surface (28) de l'échancrure (14), afin d'éviter un glissement ou un déplacement d'accessoire disposé dans l'échancrure.

2. Élément de cadre de bicyclette selon la revendication 1, **caractérisé en ce que** l'échancrure (14) est réalisée comme concave.

3. Élément de cadre de bicyclette selon la revendication 1 ou 2, **caractérisé en ce que** l'échancrure (14) s'étend dans la direction longitudinale (16) du tube de cadre (10).

4. Élément de cadre de bicyclette selon la revendication 3, **caractérisé en ce que** l'échancrure (14) présente une longueur d'au moins 10 cm, de préférence d'au moins 15 cm et tout particulièrement d'au moins 20 cm.

5. Élément de cadre de bicyclette selon l'une des revendications 1 à 4, **caractérisé en ce que** l'élément de maintien (20) est au moins partiellement réalisé comme élastique.

6. Élément de cadre de bicyclette selon l'une des revendications 1 à 5, **caractérisé en ce que** l'élément de maintien (20) est réalisé comme courroie de maintien, dans lequel au moins deux courroies de maintien sont de préférence prévues.

7. Élément de cadre de bicyclette selon l'une des revendications 1 à 6, **caractérisé en ce que** l'élément de maintien (20) est au moins partiellement réalisé comme membrane et/ou comme filet.

8. Dispositif de cadre de bicyclette selon l'une des revendications 1 à 7, **caractérisé en ce que** l'élément de maintien (20) comporte au moins une poche d'accueil (22), destinée en particulier à accueillir de petites pièces.

9. Élément de cadre de bicyclette selon l'une des revendications 1 à 8, **caractérisé en ce que** l'élément de maintien (20) est relié de manière détachable au tube de cadre (10).

10. Élément de cadre de bicyclette selon l'une des revendications 1 à 9, **caractérisé en ce que** l'échancrure (14) est ouverte vers le haut.

11. Élément de cadre de bicyclette selon l'une des revendications 1 à 10, **caractérisée en ce que** le tube de cadre (10) comporte des éléments de fixation sur une surface (28) de l'échancrure (14).
